# EUROPEAN PATENT APPLICATION

(11) **EP 4 764 921 A1**
(43) Date of publication of application: **24.06.2026**
(21) Application number: 24307222.0
(22) Date of filing: 20.12.2024
(51) Int. Cl.: G06F 21/57, G06F 21/64, G06N 20/00

(54) **ATTESTATION OF ORIGIN CONTROLLER FOR MACHINE LEARNING MODELS**

(71) Applicant: THALES DIS FRANCE SAS, 92190 Meudon (FR); THALES, 92190 Meudon (FR)
(72) Inventor: PRADEN, Anne-Marie, 13122 Ventabren (FR); PEIRANI, Béatrice, 13119 Saint-Savournin (FR); KAPUSTA, Katarzyna, 75015 Paris (FR)
(74) Representative: Grevin, Emmanuel

(57) **Abstract**

Provided is a system and method, implemented by way of a framework and protocol, for dynamic verification of an ML model trustworthiness in a zero-trust and distributed environment, based on ML model watermarking in conjunction with the production of an attestation. The attestation protocol for a MLaaS function verifies the origin and ownership of a trained ML model used therein. An attestation of origin (AO) result is produced to provide ML model ownership information, whereby a cloud application can evaluate the AO result to verify the ML model ownership information as to whether it can trust the ML model, for example, according to its policy and decide whether to use it or not. Other embodiments disclosed.

## Description

### TECHNICAL FIELD

The present invention relates generally to machine learning in cloud architecture environments, and more particularly, to verifying ownership and trustworthiness of ML models used in cloud applications in a Machine Learning as a Service (MLaaS) environment.

### BACKGROUND

Cloud application Machine Learning (ML) refers to the practice of developing and deploying machine learning models using the infrastructure and services provided by a cloud computing platform, allowing users to build and run complex Artificial Intelligence (Al) applications without managing their own hardware, and enabling scalability and efficient data processing in the cloud. Machine Learning as a Service (MLaaS) refers to the wide range of machine learning tools offered as services from cloud computing providers. It is similar to cloud service models such as software as a service (SaaS) or platform as a service (PaaS), and can automatically train, test, and deploy machine learning models, typically by leveraging an Al platform with offsite servers in a "cloud" to run them on behalf of the customer. MLaaS encapsulates ML models and their capabilities, enabling users to Query ML Model interface and obtain Model prediction, without knowing or accessing the ML Model architecture.

Verification of an ML model refers to the process of assessing and validating the performance of a machine learning model to ensure its accuracy and reliability on unseen data, thus building trust in its predictions by evaluating its performance against various metrics and testing scenarios, often involving techniques like data splitting, cross-validation, and analyzing model interpretability. Trustworthiness of the ML Model is critical, and it is crucial to validate their performance before deploying them in production.

This is also because MLaaS models can be maliciously altered by threat actors, causing systems to malfunction, or to execute an attack. Attackers can intentionally repurpose machine learning models with deceptive input to cause errors in ML predictions. As ML models become increasingly complex and valuable, there is a need to protect them from misuse and tampering. The use of a theft model, trained by erroneous data set and using erroneous training parameters, could have disastrous impact on an application that uses them.

Watermarking is one technique to include a hidden signature or identifier within a machine learning model to allow the owner to prove their ownership of the model if it is ever copied or misused. It involves embedding watermarks or unique patterns in the models to track ownership. So called "full-knowledge" watermarking is done by making imperceptible changes to the model weights, architecture, or neural activations in a way that encodes the owner's information and does not significantly affect model performance. The "zero-knowledge" watermarking is done by modifying the model behavior and can be compared to insertion of a set of legitimate backdoors during the training phase. This watermark can later be extracted to verify ownership and provenance. Watermarking techniques are often specific to the model architecture and are usually implemented as a software wrapper to the ML model for watermark analysis and detection purposes .

Some techniques described in the European Telecommunications Standards Institute (ETSI) Technical Report (TR)104 032 v1.1.1 "Traceability of AI models" disclose ML watermarking or ML model traceability technologies that are suitable for model owner identification and to verify the quality and provenance of the training data and parameters. The verification of the trustworthiness of the ML Model ensures that an application using the ML Model can trust the associated data training set and training parameters. They must be legitimate for which a provenance can be attested, and preferably, before using such service.

One patent EP4020880A1 entitled method, apparatus and machine-readable storage to verify trained models in an edge environment discloses means for evaluating trustworthiness of a trained ML model based on attestation scores. In some examples, a blockchain verifier is implemented to request a third appliance that is associated with a blockchain attestation of the model to validate the model.

However, the provided implementations and guidance in these documents are not clear on how an a cloud application that needs the use of MLaaS can have, or obtain, access to such information to verify that the ML model is a legitimate one to trust, or how to use watermarking within an attestation to be able to provide this trust, let alone, how to incorporate watermarking into an attestation service in a MLaaS environment.

### SUMMARY

This invention describes a framework and protocol for a dynamic verification of the ML model trustworthiness in a zero-trust and distributed environment, based on ML model watermarking in conjunction with the production of an attestation of an MLaaS function.

In some embodiments, an attestation protocol for a MLaaS function is provided to verify the origin and ownership of a trained ML model used therein. The inventive protocol produces an attestation of origin (AO) result to provide ML model ownership information, whereby a cloud application is then able to verify with ML model ownership information as to whether it can trust the ML model according to its policy and decide whether to use it or not.

In some embodiments a system (100) for verifier controlled attestation of an origin of a Machine Learning (ML) Model (7) provided by a MLaaS (21) to a cloud application (5) in a zero-trust and distributed environment is claimed.

In some embodiments the cloud application (5) provides for requesting (301) from the ML Model (7), ownership information; receiving (319), from an ID Agent (121), an ownership information for the ML Model (7) responsive to the requesting; evaluating (320) a trustworthiness of the ML Model from the ownership information according to a policy; and using (321) the MLaaS (21) upon confirming the trustworthiness of the ML model via the evaluating.

In some embodiments the Attester Agent (120) performs receiving (302), from the ML Model, an Attestation Origin (AO) Request that includes a ML Bill of Materials (BOM); conveying (303) the AO Request to a Verifier (30) whom responds (308) with a Watermark Measurement Request (WMR); soliciting (309) the ML Model with selected Inputs in the Watermark Measurement Request; receiving (310) Outputs produced from the ML Model responsive to the soliciting; building (311) an Attestation Origin Controlled (AOC) Evidence with the selected Inputs and Outputs and the ML-BOM; conveying (312) the AOC Evidence to the Verifier whom responds (318) with an Attestation Origin (AO) Result.

In some embodiments the Verifier (30) performs receiving (303), from the Attester Agent (120), the AO Request and from it verifying an owner; selecting (304) a Challenger in view of the AO Request based on owner trust type; conveying (305) the AO Request a Watermark Verification Request (WVR) of the ML Model in view of the AO Request; receiving (306) from the Challenger, selected Inputs from a golden measurement set; generating the Watermark Measurement Request for said selected Inputs from the WVR; sending (308) the Watermark Measurement Request to the Attester Agent (120); receiving (312), from the Attester Agent, the AOC Evidence in response to said soliciting; comparing (315) the Outputs in the AOC Evidence with trusted Outputs thereby evaluating watermark labels of the ML Model; attesting (316) an origin of the ML model upon determining said comparing is a match; extracting (317) ownership information from the ML-BOM and watermark labels; building the AO Result with the origin of the ML model and ownership information;

In some embodiments the ID Agent (121) performs receiving (318) the AO Result from the Verifier (30); generating ownership information from the AO Result that proves origin and the ownership information of the ML Model used by the MLaaS; presenting (319), to the cloud application, the ownership information for said evaluating the trustworthiness of the ML Model.

In some embodiments the Challenger (31) performs verifying (304) an owner of the ML Model from the AO Request; selecting Inputs from a golden measurement set to produce said selected Inputs upon said verifying the owner; verifying (307) the AO Request is legitimate for said owner in order to send said selected Inputs to the Verifier,

In some embodiments the system attests the origin of the ML model, adapts and integrates ML model watermarking verification via a remote attestation protocol, and presents the ownership information.

In some embodiments the Cloud Application, Attester Agent, ID Agent, Verifier and Challenger execute on one or more hardware processors with hardware memory coupled to the one or more processors having computer instructions and data which when executed by the one or more processors causes them to perform their respective operations of the system.

In some embodiments the step of evaluating a trustworthiness of the ML Model includes evaluating ownership information in the policy to confirm: the owner of the ML Model is trusted; the Challenger is trusted by the owner; the watermark labels are that of the owner for the ML Model; a quality of training data and parameters used by the ML Model; and a provenance of the ML Model.

In some embodiments the ownership information is presented in an ID document with the AO result as an attribute therein.

In some embodiments the Verifier reviews the AO Request to assess from it a trust mode that indicates one of whether: the owner of the ML model trusts the Verifier to serve as the Challenger, with the Verifier selected as the Challenger; and the owner of the ML model does not trust the Verifier to serve as the Challenger and selects the Challenger from a list of entities named and trusted in the AO Request, wherein the golden measurements are stored in a secure vault as part of a registration process.

In some embodiments the selected Inputs are encrypted input plus label pairs, and said Verifier (30) evaluates watermark labels of the ML Model by way of Fully Homomorphic Encryption (FHE) for ML model proof to assess matching of watermark labels. In some embodiments the selected Inputs are non-encrypted input and said Verifier (30) compares watermark labels of the ML Model to a reference or registered watermark label.

In some embodiments the Watermark Verification Request (WVR) consists of Inputs and encoded Inputs plus labels pairs selected from the golden measurements by way of an optional nonce (nonce 1), wherein the nonce 1 defines which watermarking key inputs are used in the Watermark Measurement Request (WMR), the ratio of Input mixing with non-watermarks and an ordering of the Inputs.

In some embodiments the the Watermark Measurement Request (WMR) consists of said Inputs, said Attester Key IDs to sign the AOC the evidence, claims concerning attestation of the origin of the ML Model, and an optional nonce (nonce 2) to prevent replay attacks.

In some embodiments the AOC evidence comprises: a public key of said Attester Key IDs, collected labels of ML Model outputs, ML-BOM information, and an optional a nonce (nonce 2).

In some embodiments the Verifier 30 for verifier controlled attestation of an origin of a Machine Learning (ML) Model (7) provided by a MLaaS (21) to a cloud application (5) in a zero-trust and distributed environment is claimed. In some embodiments the Verifier (30) evaluates watermark labels of the ML Model by way of Fully Homomorphic Encryption (FHE) for ML model proof to assess matching of watermark labels.

In some embodiments a method (350) for verifier controlled attestation of an origin of a Machine Learning (ML) Model provided by a MLaaS to a cloud application in a zero-trust and distributed environment by way of a system is claimed.

In some embodiments the system and method align with attestation procedures as defined by Internet Engineering Task force (IETF) RATS RFC 9334 for integrity verification in conjunction with ML model watermarking as introduced in ETSI SAI TR 104 032 v1.1.1 "Traceability of Al models".

Advantageously, the inventive framework and protocol provides for a secure dynamic verification of the origin and ownership of a watermarked ML model, which can be deployed in a zero-trust environment, for example, where the cloud application has no knowledge on the cloud services it uses. It is novel in that it provides a verifier controlled attestation of the origin of a ML Model in real-time on request, adaptation and integration of ML watermarking verification in a remote attestation protocol. In some embodiments the ML model ownership information can be included in an ID presentation document of the MLaaS service using the ML model or could be alternatively directly sent to a third party.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** depicts a system that offers MLaaS with watermarking and attestation services to provide dynamic verification of ML model trust to cloud applications where when the verifier is trusted by the owner of the ML model in accordance with some embodiments;
**FIG. 1B** depicts the MLaaS system of FIG. 1 in a distributed and service-based architecture with the inclusion of a Challenger in accordance with some embodiments where the verifier is not trusted by the owner of the ML model;
**FIG. 2A** diagrammatically illustrates an aspect of the protocol for secure ML model ownership verification where non-encrypted inputs are used for ML model verification to assess a ML model in accordance with some embodiments;
**FIG. 2B** diagrammatically illustrates an aspect of the protocol for secure ML model ownership verification where encrypted inputs are used for ML model verification to assess a ML model in accordance with some embodiments;
**FIGS. 3A****,** **3B** and **3C** illustrate together a sequence diagram of a protocol that implements MLaaS with watermarking and attestation for cloud applications to perform dynamic verification of ML model trust in accordance with some embodiments;
**FIG. 4** illustrates an exemplary component block diagram of service provider in accordance with some embodiments;
**FIG. 5** illustrates an example of a storage medium suitable for use with persisting policy configurations in accordance with some embodiments; and
**FIG. 6** illustrates an example of a computing platform suitable for use with persisting

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

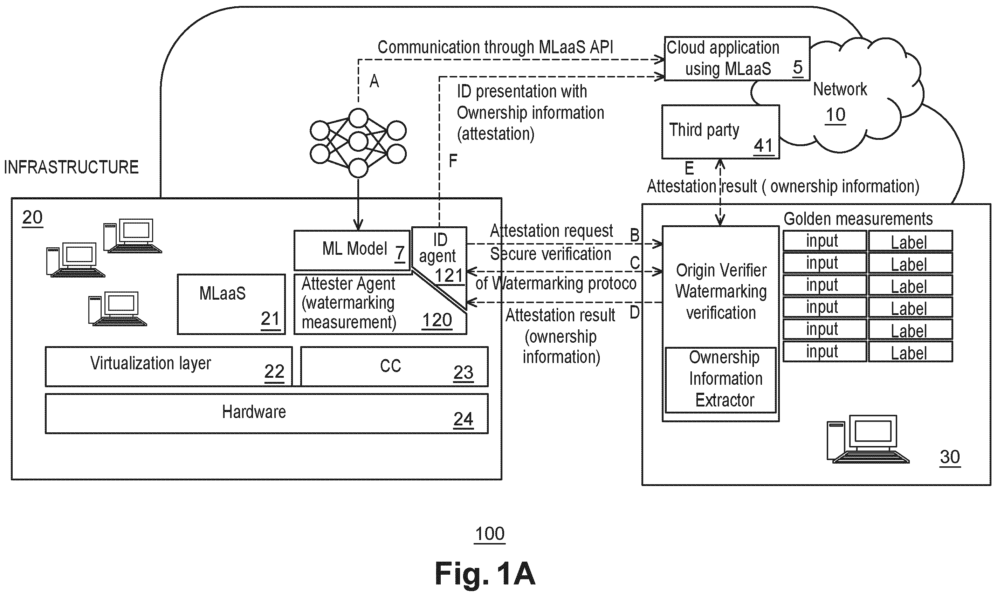

**FIG. 1A** depicts a system **100** that, by way of Infrastructure **20,** including at least Attester Agent **120,** ID Agent **121,** and Verifier **30,** offers dynamic verification of ML model trust to cloud applications. In this exemplary configuration, it employs an attestation model of type "passport" as described in RATS RFC 9334, but additionally includes the verification of ML model watermarking with a remote attestation process. The cloud application **5** uses the Machine Learning as a Service (MLaaS) **21** to add Machine Learning (ML) capabilities. The MLaaS **21** provides access and use of the Machine Learning (ML) model **7** for this purpose. The ML Model **7** includes watermarking that proves ownership.

Within this Infrastructure **20,** the Attester Agent **120** and the ID Agent **121** work together with Verifier **30** to evaluate the watermark of the ML model **7** and provide a proof of trust to the cloud application **5** or a third Party **41;** namely, that the ML model **7** used with the Infrastructure **20** over the communication network **10** is trusted and legitimate. As described ahead, this proof of trust is provided in the form of an attestation of origin (AO) result, or an ID presentation document, that the ID Agent **121** sends to the cloud application **5** or the Third Party **41.** The cloud application **5** verifies the ownership information in the AO result, or the ID document, and then decides whether to trust the ML model **7** according to its policy. In another embodiment the AO result is presented to a Third party **41** which is a relying party as defined in the RATS architecture.

As a precondition, the ML model **7** is instantiated after its training stage; a process in which an Artificial Intelligence algorithm of the ML model **7** is input with training data from which it can learn. The ML model **7** is considered to be already trained at its instantiation time, and there is no other training after instantiation. The watermarking is also applied to the ML model before the instantiation. Optionally, the watermarking may be associated, not only to the owner of the ML Model, but also to the infrastructure where the MLaaS is instantiated. If it is the case, the remote attestation can check that the Model is really instantiated in the suitable infrastructure, but in this case the MLaaS service cannot be moved to another location, except if the infrastructure verification is disabled in the attestation process. As another precondition, certain input/label pairs of trained ML models and their associated expected output measurements are stored in a vault as part of a registration process; these are called golden measurements. In the context of large language models (LLMs), a golden dataset is a curated collection of high-quality data, often question-answer pairs, whose golden measurements serve as a benchmark for watermark evaluation.

The Infrastructure **20** is itself a system with one or more servers each comprising hardware **24,** for example, to run an operating system and provide confidential computing (CC) **23** and virtualization layers **22.** The Infrastructure **20** hosts the MLaaS **21** and data exchanges with the cloud application **5** related to use of the ML model **7.** The cloud application **5** can communicate with the infrastructure components over an Application Programming Interface (API) as seen in **Step A.** This can include ML model training data as well as ML model parameters. The Attester Agent **120** coordinates an attestation of the ML model **7** with the Verifier **30,** and is involved in the watermarking measurement. It launches an attestation for the ML model **7** through a series of communications, the first of which includes sending an attestation request to the Verifier **30** as seen in **Step B.** Then, the Verifier **30** and the Attester Agent **120** set up a secure communication channel between each other suitable for use with the watermark verification protocol as seen in **Step C.**

The Verifier **30** upon receiving the attestation request, and from information contained therein, selects input/label pairs to be used for watermark evaluation from the golden measurements. Briefly, the determination of the ML Model origin and its attestation or origin is entirely controlled by the Verifier **30.** The golden measurements are stored locally since the Verifier is trusted by the Owner in this example. Thus, the Verifier **30** has access to golden measurements, which are effectively input/label pairs that serve to validate predictions of a watermarked ML model. Upon selection of certain input/label pairs, the Verifier **30** holds onto the labels (e.g. Labels_C) of the selected Input, which effectively represent the watermark of the ML Model for reference purposes, and sends off the Inputs from these pairs to the Attester Agent **120** over the secure communication channel. The Attester Agent **120** then solicits the ML model **7** with those Inputs to produce corresponding outputs. The corresponding outputs are measurements of the ML model **7** with respect to those specific inputs, and represent the watermark measurement of the ML Model. The outputs have their own associated labels (e.g. Labels_M).

The Attester Agent **120** then builds an Attestation Origin Controlled (AOC) evidence containing those inputs and corresponding outputs (e.g. Labels_M) represented as input/label measurement pairs. It also includes in the AOC evidence, a Machine-Learning-Bill of Materials (ML-BOM) that identifies the inventory of all components involved in the development and deployment of the ML Model **7.** This ML-BOM includes metadata associated to the ML Model that describe, for example, the model type, the dataset used for the ML model training, parameters for the ML model type, and watermarking information such as the type of watermarking. The Attester Agent **120** signs the AOC evidence with its private key.

It then sends the signed AOC evidence to the Verifier 30 over the secure communication channel as part of **Step C** via the unique watermark verification protocol. The Verifier **30** compares the AOC against the earlier selected input/label pairs (Inputs, Labels_C) of the golden measurement to verify the watermark of the ML Model **7.** The Verifier **30** confirms that the measurements received in the AOC evidence match the expected corresponding golden measurements. The output measurements are labelled, hence, referred to also as labels. A successful verification occurs when the produced corresponding output (e.g. Labels_M) match the expected output (e.g. Labels_C).

In this stage, where the label matching is correct, the Verifier **30** extracts ownership information from the labels using the ML-BOM included in the AOC. The ownership information relates to origination data and ownership of the ML model **7** used by the MLaaS **21.** This extraction depends on the type of watermarking used, for example, an image containing the ownership information with a digital logo encoded in the pixel information of the image. It may be also an audio watermarking or other type. The Verifier **30** interprets the watermarking type from the AOC sent by the Attester Agent **120** retrieved from the ML-BOM.

The Verifier **30** then generates the attestation of origin (AO) result that includes the watermark verification along with the additional ownership information. The Verifier **30** sends this AO result in a message to the ID Agent **121** as seen in **Step D.** Optionally, the Verifier 30 may also send the same AO result to the Third Party **41** at **step E.** The generation of the AO result is done by the Verifier 30 before it communicates with the Third Party **41** to attest the ownership information.

In some arrangements, upon receipt of the message from the Verifier **30,** the ID Agent **121** produces an Identification (ID) Document for the ML Model **7** from the AO Result. This ID document includes the watermark verification of the ML Model **7,** along with other verification data and attestation of origin results. The ID Agent **121** presents the ID Document to the cloud application **5,** for example, by way of the Application Programming Interface (API), as seen in **step F.** The cloud application **5** inspects the received ID document to decide whether it trusts the MLaaS **21**, and starts the use of the MLaaS service per policy considerations if so. In other arrangements that are not based on presentation of an ID document, the ID Agent **121** sends the AO results directly to the Cloud Application **5** for its inspection of the contents; namely, the ownership information and watermark verification to decide whether to trust the ML model **7** according to its policy.

The policies specify which owners of ML models or MLaaS services are trusted and any conditions. After successful verification that the MLaaS is trustable according to its policies, the cloud application **5** starts the use of MLaaS service. Here, the Cloud Application **5** can be considered a Relying Party. There are multiple relying parties in this architecture. The ID Agent **121** can also be considered a Relying Party and verify if the ownership information it received in the attestation request from the Verifier **30** is correct for this ML Model as a pre-filtering step before providing the ID Document to the cloud application **5.** Another relying party could be an external entity that needs the ownership information for another purpose.

The network **10** is a broad system of interconnected links between the Infrastructure **20,** the cloud application **5,** the Attester Agent 120, the ID Agent **121**, the Verifier **30** and the 3^{rd} Party **41**. The network **10** can be an Internet network, and in some cases include a telecommunication network. By way of the network **10,** the components can establish connections amongst one another and with other devices to exchange information or cryptographic related services, including identity verification and access management. A secure communication channel can be established on each link between components, which may have, or can generate their own key pairs comprising a public key and a private key. The secure communication channel can be set up and managed via state-of-the-art cryptographic suites and technologies and/or Public Key Infrastructure (PKI). As one example, Elliptic-curve Diffie-Hellman (ECDH) is a key agreement protocol that allows each of the components to establish a shared secret over an insecure channel. This shared secret may be directly used as a key, or to derive another key, for encrypting/decrypting the data along with their private keys.

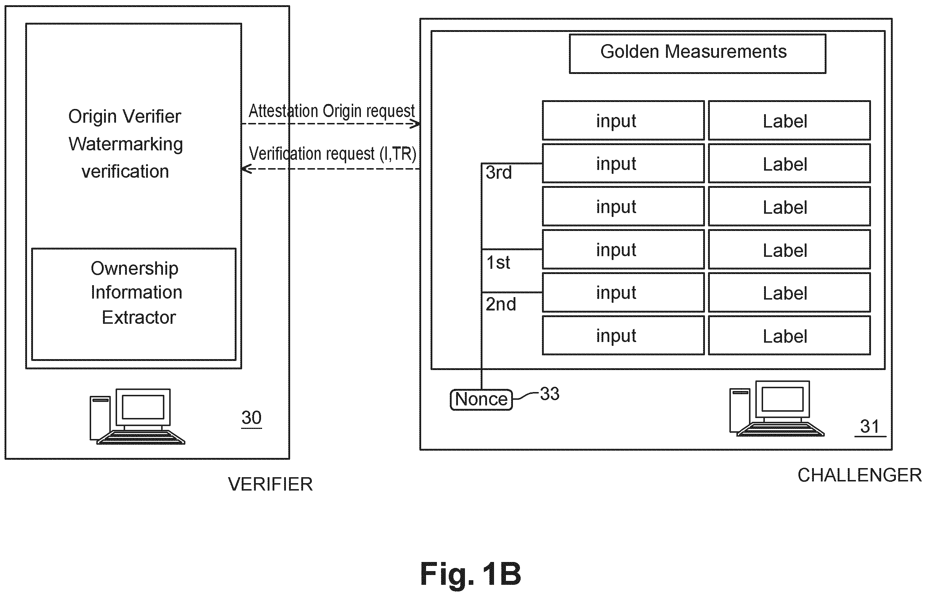

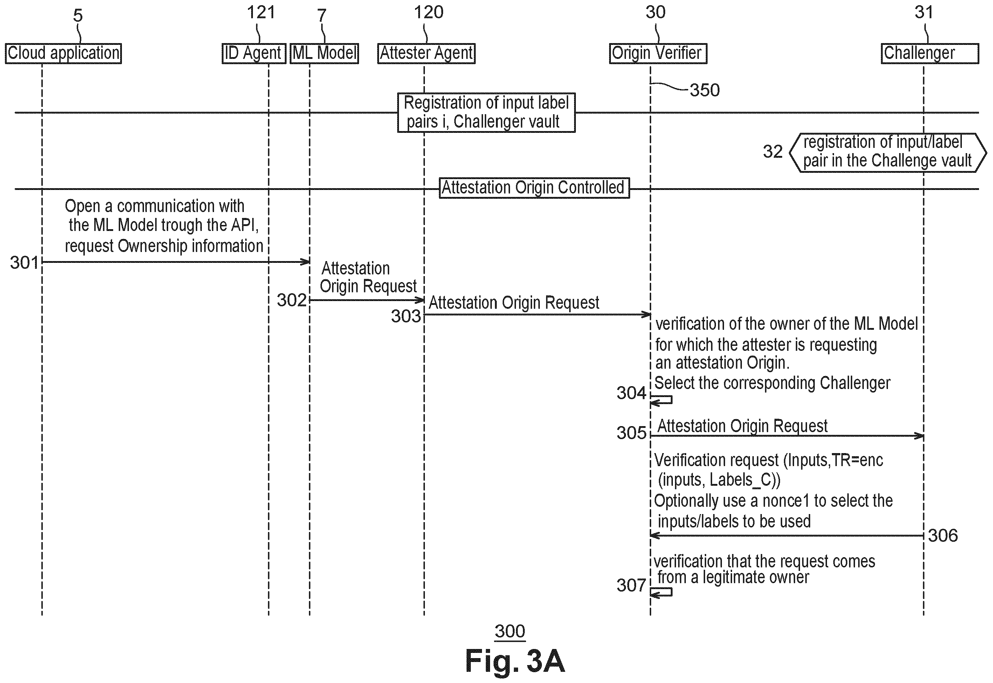

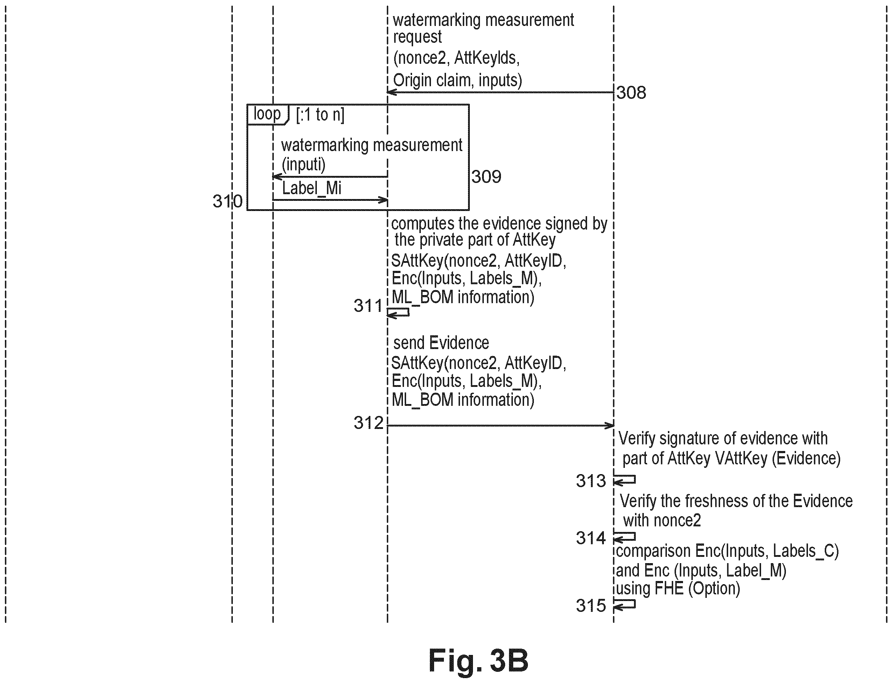

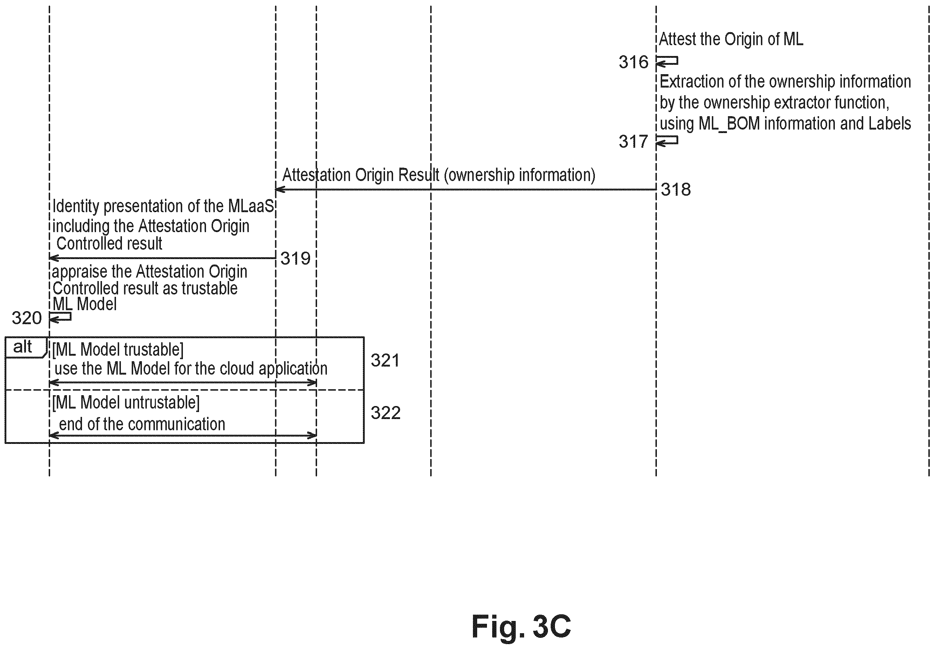

**FIG. 1B** depicts the MLaaS system of FIG. 1A in a distributed and service-based architecture in situations where the verifier **30** is not trusted by the owner of the ML model to hold the golden measurements in accordance with some embodiments. The system **100** additionally comprises a Challenger **31** that is trusted by the owner of the ML model and whom holds, or has access, to the golden measurements for validating predictions of watermarked ML models. Here, the golden measurements are stored as input/label pairs in the Challenger **31** vault, as part of a registration process (see protocol step **32** in FIG. 3). This registration is performed beforehand and may also include storing encrypted input/label pairs for later use as zero knowledge proof that will be needed during secure ML model ownership verification, for example, by way of Multi-Party Computation (MPC).

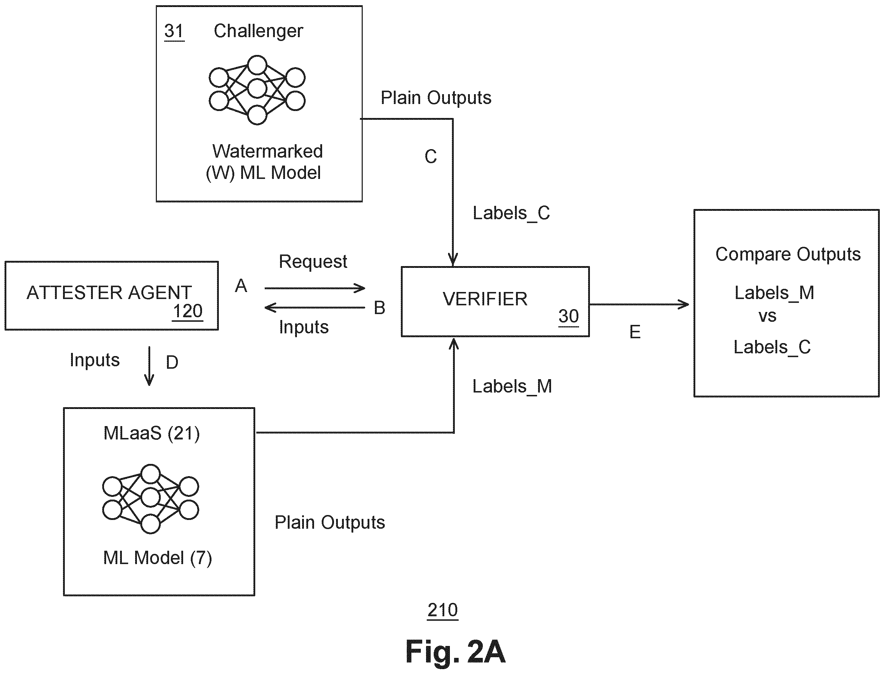

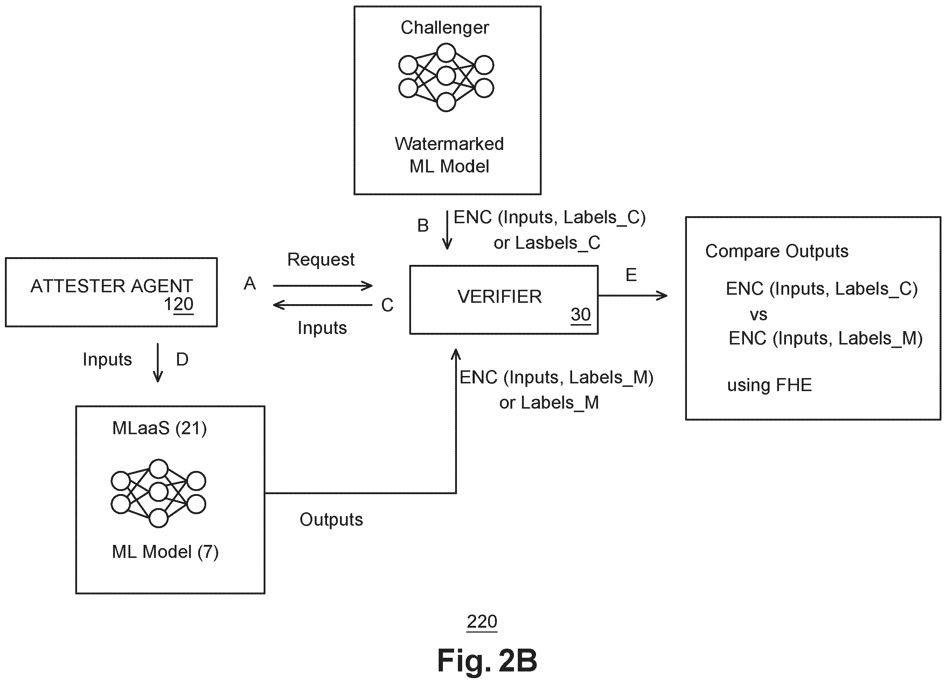

Here, the Verifier **30** will transmit a request for attesting the origin of the MP model, to which the Challenger **31** will respond with a verification request which will include input/label pairs it selects form the golden measurements. This may include Inputs (I) and a Training Record (TR) with encrypted input and label pairs depending on a mode, for example, if plain text inputs are used, or encrypted inputs are used as explained ahead in FIGS **2A** and **2B****.** The Challenger **31** may optionally use a nonce **33** as a parameter for the generation of the verification request, for example, to randomly select input/label pairs from the golden measurements.

The nonce **33** serves to prevent replay of the verification answers. It identifies which of the watermarking key inputs (trigger inputs) will be used in the verification request, the ratio of their mixing with non-watermark inputs (normal inputs), and the order of the inputs, for example, 1^{st}, 2^{nd} or 3^{rd} as illustrated. Upon its receipt, the Verifier **30** uses these input/label pairs for verification, but does not know the selection properties as a result of the nonce. In another arrangement the nonce may be additionally used by both the Verifier and the Challenger as a method to prevent replay attacks, ensuring that the specific prior golden measurement selections of one request cannot be reused by malicious actors during a later attestation origin verification.

**FIG. 2A** diagrammatically illustrates an aspect **210** of the protocol for secure ML model ownership verification, to provide as an example a situation where non-encrypted inputs are used for ML model verification to assess a ML model. This aspect coincides with **Step C** of **FIG. 1A** for secure verification of watermarking protocol.

Briefly, a "watermarked ML model" behaves normally for standard inputs, but exhibits a unique, identifiable response when presented with specific "trigger" data input, allowing the verifier to verify the ML Model ownership by observing its behavior on these trigger inputs, effectively acting as a hidden signature to prove ownership. The inputs may be data patterns or other formatted information presented to the watermarked ML models which respond by outputting the watermark label.

On this point, for terminology clarification, datasets are used to train and test ML models. A dataset typically consists of input data and corresponding output labels. For instance, in a dataset for image classification, each image would be paired with a label indicating the object in the image. The process of optimizing a ML model's parameters is through repeated presentation of the dataset. During training, the model learns to map input data to the correct output labels by minimizing a loss function. Once a ML model is trained, it can be used to make predictions on new, unseen data. As seen previously in **FIG 1A** and **1B**, the golden measurements are input and label pairs that serve to validate predictions of the watermarked ML model.

Here, the Attester Agent **120** sends a request to the Verifier **30** at **step B** to select a set of ML model (non-encrypted) inputs from the golden measurements. In situations where the Verifier **30** is trusted by owner of the ML model, the Verifier **30** performs functions of the Challenger **31** select the input/pairs under watermark evaluation. In situations where the Verifier **30** is not trusted the Verifier **30** will engage with the Challenger **31** who holds, or has access to, the golden measurements as seen in **FIG. 1B****,** and who will instead select the inputs to the ML models used to solicit outputs by the Attester Agent **120.** These are two separate trust modes. And in both cases, none of the parties-Verifier **30,** Attester Agent **120** and Challenger **31** knows which inputs from the selected set of inputs are normal or which are watermark triggers.

The Verifier **30** replies to the Attester Agent **120** with the selected set of inputs at **step C.** Some of the inputs are normal, in that they do not trigger a watermark response, and other inputs are triggers, which evoke a watermark response. At this stage, the Verifier 30 does not know which inputs from the selected set of inputs are normal or which are watermark triggers.

The Attester Agent **120** also presents the set of inputs to the ML Model **7** under evaluation for the MLaaS **21** to produce as plain text output the Labels_M at **step D.** The Verifier **30** then compares at step E Labels_M against the Labels_C provided by the Challenger **31** at step B, to assess whether they match. The Verifier **30** reports this verification status for the provided input back to the Attester Agent **120.**

**FIG. 2B** diagrammatically illustrates an aspect **220** of the protocol for secure ML model ownership verification where encrypted inputs are used for ML model verification to assess a ML model, in accordance with some embodiments. This aspect also coincides with **Step C** of **FIG. 1A** for secure verification of watermarking protocol. The Verifier 30 performs a similar assessment as before, but the inputs and outputs are encrypted. This aspect of the protocol is representative of a zero-knowledge watermark and is a more realistic model without access to the internal workings of the ML model 7. With this type of watermarking the Attester Agent **120** is independent to the MLaaS **21** and the deployment is then easier, without specific configuration, and the protocol is independent to the MLaaS under measurement.

Here, the Verifier **30** (or Challenger **31)** can leverage a zero-knowledge proof model to generate the output labels (Labels_C) of the watermarked ML model for selected encrypted inputs. Briefly, an "Al model zero-knowledge proof" refers to a cryptographic technique where an Al model can demonstrate to a verifier that it possesses specific knowledge or has performed a computation correctly, without revealing any sensitive information about the underlying data used in the process, essentially proving "knowledge" without revealing the "knowledge itself". This can be facilitated by Multi-Party Computation (MPC), also known as secure multi-party computation or secure computation, which is a cryptographic technique that allows multiple parties to work together to compute data without sharing their private information. MPC works by using cryptographic protection to ensure that Verifier **30** and Challenger **31** (See FIG. 1B) cannot view each other's data. The parties can decide who can see the results of the computation.

The Attester Agent **120** sends a request to the Verifier **30** to select a set of ML model encrypted inputs at **step A.** The encryption contains indication of which inputs are normal and which are watermark triggers, though, the Verifier **30** (or Challenger **31)** does not know this indication status.

Depending on the trust mode, the Verifier **30** proceeds to select the set of ML model inputs from the golden measurements. For example, when the Verifier is trusted by the ML model owner, it will perform the selection. When the verifier is not trusted, it will ask the Challenger **31** to perform the selection. In either case, each can produce, plain inputs, seen as Inputs, and/or encrypted inputs with labels, seen as, ENC(Inputs, Labels_C).

At **step B,** the Verifier **30** retrieves from the registration authority, by way of zero knowledge proofs, the set of ML model encrypted inputs associated with the selected Input, seen as, ENC(Inputs, Labels_C) for Challenger. The selection of inputs/labels pairs are considered challenges and may be mapped to the golden measurements that are used for the integrity attestation. Here, the Verifier **30** (or Challenger **31)** does not know which inputs and corresponding labels from the selected Inputs are normal or which are watermark triggers because they are encrypted.

The Verifier **30** passes the encoded inputs to the Attester Agent **120** at **step C.** Alternatively, if encryption is not used, the Verifier 30 simply sends the selected Inputs to the Attester Agent **120.** Here too, the Attester Agent **120** does not know which inputs from the selected Inputs are normal or which are watermark triggers.

At **step D,** the Attester Agent **120** presents the encrypted inputs (or plain inputs) to the ML model **7** under MLaaS **21** evaluation, which produces as output the encrypted input with Labels_M (measured), or plain output Labels_M, at **step D.**

The Verifier **30** compares the two sets of labels, Labels_C and Labels_M, at **step E** to assess whether they match. A direct comparison can be made on plain text labels. Whereas if the output predictions are encrypted, then the Verifier may leverage Fully Homomorphic Encryption (FHE) for AI model proof to assess the label matching step. The Verifier **30** reports the verification status of the labels for the provided input back to the Attester Agent **120.**

**FIG. 3** illustrates a sequence diagram of a protocol **300** that integrates ML model watermarking and Malas remote attestation for cloud applications to perform dynamic verification of ML model trust in accordance with some embodiments. When describing the protocol **300,** reference will be made to certain components shown in the system of **FIG 1A** for technical enablement. More or less than the number of components shown may be used, and is not limited to only those components shown. Reference will also be made to **FIGS 2A** and **2B** when describing specific steps of the protocol **300** for secure verification of watermarks embedded into the ML Model.

With the presence of the Challenger **31,** this situation represents an exemplary case where the owner of the ML model does not trust the Verifier. As an initial matter, step **32** corresponds to the precondition discussed earlier, whereby input/label pairs are stored in a cryptographic vault as part of a registration process. When the Verifier **30** is trusted by the owner, the vault may be stored locally in a secure memory. When the Verifier **30** is not trusted by the owner, the vault may be stored with the Challenger **31.**

The use-case example for protocol **300** is based on a trust mode where the owner of the ML Model does not trust the Verifier **30.** Hence, the Challenger **31** is shown. The registration at step 32 of the inputs/labels pairs in the Challenger vault is performed before the Attestation of Origin (AO) request is sent to make the challenger labels (Labels_C) available for a selected input.

The protocol can start at step **301,** where the cloud application **5** opens a communication with the recently instantiated ML Model **7** through the MLaas **21** API to request ownership information. This may for example occur via an API call over the communication session.

The ML model **7** then generates an Attestation of Origin (AO) Request in response to the ownership information request. It includes information, such as ML model data, ML parameters, ML model type, workload instantiation information, workload execution environment and watermark type within the AO Request. The ML model **7** sends the AO Request to the Attester Agent **120** at step **302.**

The Attester Agent **120** receives and inspects the Attestation Origin (AO) request. It identifies and inserts, along with other data, for example, watermark type, an attestation type and trust mode of the owner of the ML Model; for example, a trust level of the owner with respect to the Verifier, or other Challengers. It builds the aforementioned Machine-Learning-Bill of Materials (ML-BOM) to include therein with this information, and sends the revised AO Request to the Verifier **30** at step **303.** This is synonymous with **Step A** of **FIG 2B****.** The AO request may be a specific request for this type of attestation or could be the same attestation request than the one used for the attestation for ML Model integrity including a parameter that gives the type of attestation requested.

Upon receiving the AO Request, the Verifier **30** verifies from it the owner of the ML model **7** for which the Attester Agent **120** is requesting an attestation origin at step **304.** It may also verify a signature of the AO Request using the Attester Agent's public key, or via other via PKI approaches.

After verification that the AO Request is legitimate, at step **304,** the Verifier **30** selects an appropriate Challenger. For example, this may be who the owner trusts for obtaining golden measurements and to evaluate the watermarking based on the trust type and trust level. The Challenger **31** may be selected depending on owner information listed in the AO Request, for example, from names of entities that the owner of the ML model trusts, or using a list of pre-configured addresses of these challengers. The challenger can be embedded in the Verifier **30** if this verifier is trusted by the owner of the ML Model. The selection of the Challenger **31** may also be based on the type of watermark or the type of ML model and whether a Challenger is authorized to prepare inputs according to a certain type of watermark evaluation when selecting inputs from the golden measurement.

The Challenger **31** selects Input plus Label pairs from the golden measurements as previously mentioned thereby producing a set of Inputs and/or encrypted Inputs, also referred to herein as selected Inputs. This corresponds to **Step B** of **FIG 2B** when the Verifier **30** retrieves a set encrypted Inputs.

Optionally, the Challenger **31** may use a nonce (nonce 1) to select the input/label list (a first list type) from the golden measurements as previously described. The nonce 1 defines which of the watermarking key inputs will be used in the verification request, the ratio of their mixing with non-watermarks and the order of the inputs. For example, the nonce 1 can serve as a unique type of random temporarily (session based) index into the golden measurements for input selection purposes. It also serves to prevent replay of the verification answers.

The Challenger at step **306** responds with a Watermark Verification Request (WVR) with the selected Inputs; namely, the plaint text Inputs and/or encrypted Input plus Label pairs, for example, WVR = [Inputs, TR=enc(inputs, Labels_C)] to be presented to the ML Model. Upon receipt, the Verifier 30 verifies that the WVR Request comes from a legitimate owner at step **307.** This is to confirm the Challenger who generated the selected Inputs is a trusted Challenger and not a malicious one. For example, Verifier **30** decrypts a hash of a signature of the WVR using the Challenger's public key, or via other via PKI approaches.

The Verifier **30** generates a Watermarking Measurement Request (WMR) with the selected Inputs from the Watermark Verification Request (WVR) and also includes Attester Key IDs to sign the AOC the evidence, origin claims concerning attestation of the origin of the ML Model and an optional nonce (Nonce 2). The claim for information concerning the environment (infrastructure identifier) may also be included in the WMR when the watermarking is specific to the infrastructure. The nonce 2 is used for anti-replay attacks and to guarantee the freshness of the measurement. This watermarking measurement request aligns with the request Attestation command used for integrity attestation and described in "Reference Interaction Models for Remote Attestation Procedures" in draft-ietf-rats-reference-interaction-models-11. The Verifier **30** sends the Watermarking Measurement Request (WMR) to the Attester Agent **120** at step **308,** which is synonymous with **Step C** of **FIG 2B****.**

The Attester Agent **120** collects the claims received in the WMR, and then presents the selected Inputs (or encrypted Inputs) from the WMR to the ML Model **7** under MLaaS evaluation at step **309.** The ML Model **7** loops through the selected Inputs for generating from the ML Model corresponding outputs, also referred to as predictions, which are shown as Labels_M. The ML Model **7** generates outputs that are either plain text labels or encoded Input plus label pairs, for example, ENC(Inputs, Labels_M). This presentation of selected Inputs to the ML Model is synonymous with **Step D** of **FIG 2B****.** The ML Model **7** then provides these labels back to the Attester Agent **120** at shown in step **310.**

At step **311,** the Attester Agent **120** builds the Attestation of Controller (AOC) evidence containing the selected Inputs and corresponding outputs (measurements) shown as Labels_M. The AOC evidence include a different nonce (nonce 2) the Attester Key IDs, the collected labels, shown as ENC(inputs, Labels_M), and the ML_BOM information to allow extraction of the ownership information from the collected labels. As mentioned earlier, the Attester Agent **120** also includes in the AOC evidence, the Machine-Learning-Bill of Materials (ML-BOM) that identifies the inventory of all components involved in the development and deployment of the ML Model **7**. The AOC evidence may also include infrastructure identity information to compare to the watermarking if the watermarking is infrastructure specific.

During this step, the Attester Agent **120** then signs the AOC evidence with its private key of the Attester Agent **120** key pair. For example, the Attester Agent **120** may generate a hash of the AOC and then encrypt the hash, such as SHA512, with its private key. This allows the Verifier **30,** or another entity, to verify the signature using the Attester Agent's public key.

At step **312,** the Attester Agent **120** sends the AOC to the Verifier **30,** whom at step **313** verifies the signature of the AOC. For example, the Verifier **30** extricates the signature portion, decrypts it with the Attester Agent's public key, and compares that result to the same hash, such as SHA512, of the AOC. The erifier **30** confirms authenticity of the signature if the results matches the hash.

At step **314,** the Verifier **30** evaluates the freshness of the AOC evidence with the nonce 2 to ensure it is recent and associated with the existing communication session. The nonce 2 is used once and prevents replay attacks by ensuring that old communications are not being reused.

The Verifier **30** then compares at step **314** the Labels_C it received from the Challenger **31** with the Labels_M received from the Attester Agent **120.** This is synonymous with **Step E** of **FIG 2A** when the Verifier elects to compare based on plain text labels; namely, non-encrypted Inputs. Labels_C represent the watermark of the owner's original model. Labels_M represent the evaluated watermark for ML Model 7 under MLaaS evaluation. This comparison can also be performed using Fully Homomorphic Encryption (FHE) for ML model proof to assess matching of labels. When the Verifier elects to compare based on encrypted Inputs, this corresponds to **Step E** of **FIG 2B****.** If the labels match, the ML Model 7 coincides with the original/owner ML model, and is considered valid; it has not been maliciously altered.

The Verifier then proceeds to attest the origin of the ML Model at step **316** if the labels match, or a result of the comparison is within a predetermined mark or pattern to be correct.

Next, at step **317,** the Verifier **30** extracts the ownership information from the ML-BOM previously included in the AOC from step 311, and based on the Labels_C and Labels_M from the Challenger **31** and Attester Agent **120** respectively. The Verifier **30** includes an ownership information extractor from the watermarks for this purpose. This extractor depends on the type of watermarking used: e.g., an image containing the ownership information such as the company name that developed the ML Model written in the image. But it could be also an audio watermarking or other types. The Verifier gets the watermarking type in the evidence sent by the Attester Agent **120** retrieved from the ML-BOM. The ownership information obtained from the watermark relates to origination data and ownership of the ML model **7** used by the MLaaS **21.**

At step **318,** the Verifier **30** builds an Attestation Origin (AO) Result with the origin of the ML model and ownership information. The Verifier **30** signs the AO Result with its private key. It then sends it to the ID Agent **121** whom generates an ID presentation document that includes as an attribute, the AO Result with the ownership information, specific to the ML Model **7** for the MLaaS **21** under evaluation.

The ID Agent **121** then presents the ID document to the cloud application **5** at step **319,** whom then assess its trustworthiness to use in view of the the ID document in view of policies at step **320.** It inspects the attributes of the ID document to verify and trace the provenance of the ML Model 7. For example, it confirms: the owner of the ML Model is trusted, the watermark is that of the owner of the ML Model, a quality of training data and parameters used by the ML Model, and a provenance of the ML Model.The performance of the ML Model can also be confirmed in view of the ownership information that was attested, for example, the owner and features of the ML model. Upon determination that the ML Model **7** is trustworthy, the cloud Application **5** uses the ML Model within the MLaaS **21** at step **321.** This is when the cloud application **5** can start use of this MLaaS service. Otherwise, if not trusted, the cloud Application **5**decides not to use the ML Model within the MLaaS **21** at step **322.** It may also end the communication session between the cloud application and the ML model **7.**

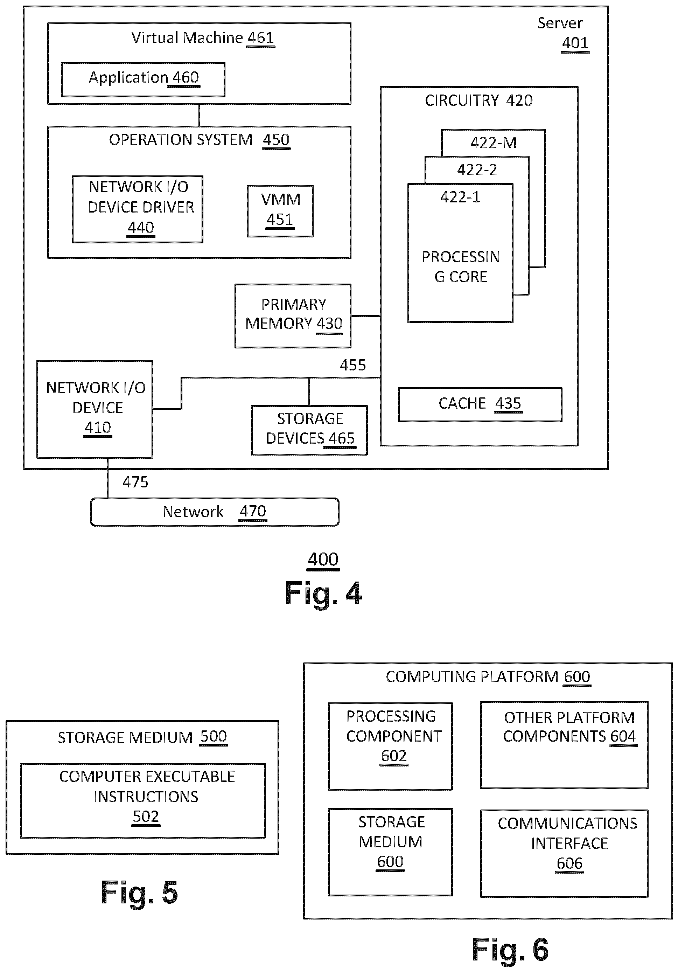

**FIG. 4** shows an exemplary server **401** (such as Verifier 30, Attester Agent **120,** ID Agent **121,** Third Party **40)** as seen in **FIGS 1-3****,** or other modules herein, that includes circuitry **420,** primary memory **430,** operating system (OS) **440**, Network (NW) I/O device driver **440,** virtual machine manager (VMM) (also known as a hypervisor) **441,** at least one application **460** running in a virtual machine (VM) **461,** and one or more storage devices **464.** In one embodiment, OS **440** is Linux^{™}. In another embodiment, OS **440** is Windows^{®} Server. Other OSs may also be used. In an embodiment, application **460** comprises one or more of a cloud license manager service having one or more smart license automatic detach policies. Network I/O device driver **440** operates to initialize and manage I/O requests performed by network I/O device **410.** In an embodiment, packets and/or packet metadata transmitted to network I/O device **410** and/or received from network I/O device **410** are stored in one or more of primary memory **430** and/or storage devices **464.** In at least one embodiment, storage devices **464** may be one or more of hard disk drives (HDDs) and/or solid-state drives (SSDs). In an embodiment, storage devices **464** may be non-volatile memories (NVMs).

In some embodiments, the service provider **401** provides the infrastructure for the the client agent **111** and server agent **131** in system **100** of **FIG. 1** for enhancing PIN security with additional hidden factors, including, but not limited to, Kiosks, **114,** mobile device **101,** Bank Tellers, ATMs, Hardware Security Modules (HSMs), and other user input devices. In some examples, as shown in **FIG. 4****,** circuitry **420** may communicatively couple to network I/O device **410** via communications link **444.** In one embodiment, communications link **444** is a peripheral component interface express (PCle) bus conforming to version 3.0 or other versions of the PCIe standard published by the PCI Special Interest Group (PCI-SIG). In some embodiments, the storage devices **464** is a disk storage for storing non-sensitive data such as the format preserving tokens representing date date, and associated encrypted data related to primary account numbers (PANs) or personally identifiable information (PII) associated with PIN entry.

In some examples, operating system **440,** network I/O device driver **440,** VM **461,** and application **460** are implemented, at least in part, via cooperation between one or more memory devices included in primary memory **430** (e.g., volatile or non-volatile memory devices), storage devices **464,** and elements of circuitry **420** such as processors with processing cores **422-1** to **422-m,** where "m" is any positive whole integer greater than 2. In an embodiment, OS **440,** VMM **441,** network I/O device driver **440,** VM **461** and application **460** are executed by one or more processing cores **422-1** to **422-m.**

In some examples, service provider **401,** includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, service provider **401** is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power and storage modules that can be shared among other nearby servers.

Circuitry **420** having processing cores **422-1** to **422-m** may include various commercially available processors, including without limitation Intel^{®} Atom^{®}, Celeron^{®}, Core (2) Duo^{®}, Core i: 3, 4, 7 and 9, Itanium^{®}, Pentium^{®}, Xeon^{®} or Xeon Phi^{®} processors, ARM processors, and similar processors. Circuitry **420** may include at least one cache **434** to store data.

According to some examples, primary memory **430** may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM) or zero-capacitor RAM (ZRAIVI). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory **430** may include one or more hard disk drives within and/or accessible by service provider **401.**

**FIG. 5** illustrates an example of a storage medium **500** as may be required by the previously mentioned system components. Storage medium **500** may comprise an article of manufacture. In some examples, storage medium **500** may include any non-transitory computer readable medium or machine readable medium, such as an optical, magnetic or semiconductor storage. Storage medium **500** may store various types of computer executable instructions, such as instructions **502** to implement method steps and logic flows described in the above figures. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

In accordance with various embodiments of the present disclosure, the methods described herein are intended for operation as software programs running on a computer processor or integrated on-chip code within static memory. Furthermore, software implementations can include, but not limited to, distributed processing or component/object distributed processing, parallel processing, or virtual machine processing can also be constructed to implement the methods described herein.

**FIG. 6** illustrates an example computing platform **600** as may be required by the previously mentioned system components. In some examples, computing platform **600** may include a processing component **602,** other platform components **604** and/or a communications interface **606.** According to some examples, processing component **602** may execute processing operations or logic for instructions stored on storage medium **600.** Processing component **602** may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure.

## Claims

1. A system (100) for verifier controlled attestation of an origin of a Machine Learning (ML) Model (7) provided by a MLaaS (21) to a cloud application (5) in a zero-trust and distributed environment, the system comprising:
the cloud application (5) for
requesting (301) from the ML Model (7), ownership information;
receiving (319), from an ID Agent (121), an ownership information for the ML Model (7) responsive to the requesting;
evaluating (320) a trustworthiness of the ML Model from the ownership information according to a policy; and
using (321) the MLaaS (21) upon confirming the trustworthiness of the ML model via the evaluating;
an Attester Agent (120) for
receiving (302), from the ML Model, an Attestation Origin (AO) Request that includes a ML Bill of Materials (BOM);
conveying (303) the AO Request to a Verifier (30) whom responds (308) with a Watermark Measurement Request (WMR);
soliciting (309) the ML Model with selected Inputs in the Watermark Measurement Request;
receiving (310) Outputs produced from the ML Model responsive to the soliciting;
building (311) an Attestation Origin Controlled (AOC) Evidence with the selected Inputs and Outputs and the ML-BOM;
conveying (312) the AOC Evidence to the Verifier whom responds (318) with an Attestation Origin (AO) Result;
the Verifier (30) for
receiving (303), from the Attester Agent (120), the AO Request and from it verifying an owner;
selecting (304) a Challenger in view of the AO Request based on owner trust type;
conveying (305) the AO Request a Watermark Verification Request (WVR) of the ML Model in view of the AO Request;
receiving (306) from the Challenger, selected Inputs from a golden measurement set;
generating the Watermark Measurement Request for said selected Inputs from the WVR;
sending (308) the Watermark Measurement Request to the Attester Agent (120);
receiving (312), from the Attester Agent, the AOC Evidence in response to said soliciting;
comparing (315) the Outputs in the AOC Evidence with trusted Outputs thereby evaluating watermark labels of the ML Model;
attesting (316) an origin of the ML model upon determining said comparing is a match;
extracting (317) ownership information from the ML-BOM and watermark labels;
building the AO Result with the origin of the ML model and ownership information;
an ID Agent (121) for
receiving (318) the AO Result from the Verifier (30);
generating ownership information from the AO Result that proves origin and the ownership information of the ML Model used by the MLaaS;
presenting (319), to the cloud application, the ownership information for said evaluating the trustworthiness of the ML Model
the Challenger (31) for
verifying (304) an owner of the ML Model from the AO Request;
selecting Inputs from a golden measurement set to produce said selected Inputs upon said verifying the owner;
verifying (307) the AO Request is legitimate for said owner in order to send said selected Inputs to the Verifier,
whereby the system attests the origin of the ML model, adapts and integrates ML model watermarking verification via a remote attestation protocol, and presents the ownership information,
wherein the Cloud Application, Attester Agent, ID Agent, Verifier and Challenger execute on one or more hardware processors with hardware memory coupled to the one or more processors having computer instructions and data which when executed by the one or more processors causes them to perform their respective operations of the system.

2. The system of claim 1, wherein the step of evaluating a trustworthiness of the ML Model includes evaluating ownership information in the policy to confirm:
the owner of the ML Model is trusted;
the Challenger is trusted by the owner;
the watermark labels are that of the owner for the ML Model;
a quality of training data and parameters used by the ML Model; and
a provenance of the ML Model.

3. The system of claim 1, wherein the ownership information is presented in an ID document with the AO result as an attribute therein.

4. The system of claim 1, wherein the Verifier reviews the AO Request to assess from it a trust mode that indicates one of whether:
the owner of the ML model trusts the Verifier to serve as the Challenger, with the Verifier selected as the Challenger; and
the owner of the ML model does not trust the Verifier to serve as the Challenger and selects the Challenger from a list of entities named and trusted in the AO Request,
wherein the golden measurements are stored in a secure vault as part of a registration process.

5. The system of claim 1, wherein the selected Inputs are encrypted input plus label pairs, and said Verifier (30) evaluates watermark labels of the ML Model by way of Fully Homomorphic Encryption (FHE) for ML model proof to assess matching of watermark labels.

6. The system of claim 1,
wherein the Watermark Verification Request (WVR) consists of Inputs and encoded Inputs plus labels pairs selected from the golden measurements by way of an optional nonce (nonce 1),
wherein the nonce 1 defines which watermarking key inputs are used in the Watermark Measurement Request (WMR), the ratio of Input mixing with non-watermarks and an ordering of the Inputs.

7. The system of claim 1,
wherein the Watermark Measurement Request (WMR) consists of said Inputs, said Attester Key IDs to sign the AOC the evidence, claims concerning attestation of the origin of the ML Model, and an optional nonce (nonce 2) to prevent replay attacks.

8. The system of claim 7, wherein the AOC evidence comprises: a public key of said Attester Key IDs, collected labels of ML Model outputs, ML-BOM information, and an optional a nonce (nonce 2).

9. A Verifier (30) for verifier controlled attestation of an origin of a Machine Learning (ML) Model (7) provided by a MLaaS (21) to a cloud application (5) in a zero-trust and distributed environment by way of a system comprising:
the cloud application (5) for
requesting, (301) from the ML Model (7), an ownership information;
receiving (319) from an ID Agent (121), ownership information for the ML Model (7) responsive to the requesting;
evaluating (320) a trustworthiness of the ML Model from the ownership information according to a policy; and
using (321) the MLaaS (21) upon confirming the trustworthiness of the ML model via the evaluating;
an Attester Agent (120) for
receiving (302), from the ML Model, an Attestation Origin (AO) Request that includes a ML Bill of Materials (BOM);
conveying (303) the AO Request to a Verifier (30) whom responds (308) with a Watermark Measurement Request (WMR);
soliciting (309) the ML Model with selected Inputs in the Watermark Measurement Request;
receiving (310) Outputs produced from the ML Model responsive to the soliciting;
building (311) an Attestation Origin Controlled (AOC) Evidence with the selected Inputs and Outputs and the ML-BOM;
conveying (312) the AOC Evidence to the Verifier whom responds (318) with an Attestation Origin (AO) Result;
the Verifier (30) for
receiving (303), from the Attester Agent (120), the AO Request and from it verifying an owner;
selecting (304) a Challenger in view of the AO Request based on owner trust type;
conveying (305) the AO Request a Watermark Verification Request (WVR) of the ML Model in view of the AO Request;
receiving (306) from the Challenger, selected Inputs from a golden measurement set;
generating the Watermark Measurement Request for said selected Inputs from the WVR;
sending (308) the Watermark Measurement Request to the Attester Agent (120);
receiving (312), from the Attester Agent, the AOC Evidence in response to said soliciting;
comparing (315) the Outputs in the AOC Evidence with trusted Outputs thereby evaluating watermark labels of the ML Model;
attesting (316) an origin of the ML model upon determining said comparing is a match;
extracting (317) ownership information from the ML-BOM and watermark labels;
building the AO Result with the origin of the ML model and ownership information;
an ID Agent (121) for
receiving (318) the AO Result from the Verifier (30);
generating ownership information from the AO Result that proves origin and the ownership information of the ML Model used by the MLaaS;
presenting (319), to the cloud application, the ownership information for said evaluating the trustworthiness of the ML Model
the Challenger (31) for
verifying (304) an owner of the ML Model from the AO Request;
selecting Inputs from a golden measurement set to produce said selected Inputs upon said verifying the owner;
verifying (307) the AO Request is legitimate for said owner in order to send said selected Inputs to the Verifier,
whereby the system attests the origin of the ML model, adapts and integrates ML model watermarking verification via a remote attestation protocol, and presents the ownership information,
wherein the Cloud Application, Attester Agent, ID Agent, Verifier and Challenger execute on one or more hardware processors with hardware memory coupled to the one or more processors having computer instructions and data which when executed by the one or more processors causes them to perform their respective operations of the system.

10. The method of claim 1, wherein the ownership information is presented in an ID document with the AO result as an attribute therein.

11. The method of claim 8, wherein the selected Inputs are encrypted input plus label pairs, and said Verifier (30) evaluates watermark labels of the ML Model by way of Fully Homomorphic Encryption (FHE) for ML model proof to assess matching of watermark labels.

12. A method (350) for verifier controlled attestation of an origin of a Machine Learning (ML) Model provided by a MlaaS to a cloud application in a zero-trust and distributed environment by way of a system comprising:
the cloud application (5) for
requesting (301) from the ML Model (7), ownership information;
receiving (319) from an Attester Agent (120), an ID document for the MLaaS (21) responsive to the requesting;
evaluating (320) a trustworthiness of the ML Model from the ownership information in the ID document according to a policy; and
using (321) the MLaaS upon confirming the trustworthiness of the ML model via the evaluating;
the Attester Agent (120) for
receiving (302), from the ML Model, an Attestation Origin (AO) Request that includes a ML Bill of Materials (BOM);
conveying (303) the AO Request to a Verifier (30) whom responds (308) with a Watermark Measurement Request (WMR);
soliciting (309) the ML Model with selected Inputs in the Watermark Measurement Request;
receiving (310) Outputs produced from the ML Model responsive to the soliciting;
building (311) an Attestation Origin Controlled (AOC) Evidence with the selected Inputs and Outputs and the ML-BOM;
conveying (312) the AOC Evidence to the Verifier whom responds (318) with an Attestation Origin (AO) Result;
generating the ID document with an attribute for the AO Result that proves origin and the ownership information of the ML Model used by the MLaaS;
presenting (319), to the cloud application, the ID document for said evaluating the trustworthiness of the ML Model
the Verifier (30) for performing said method comprising steps of:
receiving (303), from the Attester Agent (120), the AO Request and from it verifying an owner;
selecting (304) a Challenger in view of the AO Request based on owner trust type;
conveying (305) the AO Request a Watermark Verification Request (WVR) of the ML Model in view of the AO Request;
receiving (306) from the Challenger, selected Inputs from a golden measurement set;
generating (308) the Watermark Measurement Request for said selected Inputs from the WVR;
receiving (312), from the Attester Agent (120), the AOC Evidence in response to said soliciting;
comparing (315) the Outputs in the AOC Evidence with trusted Outputs thereby evaluating watermark labels of the ML Model;
attesting (316) an origin of the ML model upon determining said comparing is a match;
extracting (317) ownership information from the ML-BOM and watermark labels;
building the AO Result with the origin of the ML model and ownership information;
the Challenger (31) for
verifying (304) an owner of the ML Model from the AO Request;
selecting Inputs from a golden measurement set to produce said selected Inputs upon said verifying the owner;
verifying (307) the AO Request is legitimate for said owner in order to send said selected Inputs to the Verifier,
whereby the system attests the origin of the ML model, adapts and integrates ML model watermarking verification via a remote attestation protocol, and presents the ownership information as an attribute of the ID document of the MLaaS,

13. The method of claim 12,
wherein the Watermark Verification Request (WVR) consists of Inputs and encoded Inputs plus labels pairs selected from the golden measurements by way of an optional nonce (nonce 1),
wherein the nonce 1 defines which watermarking key inputs are used in the Watermark Measurement Request (WMR), the ratio of Input mixing with non-watermarks and an ordering of the Inputs.

14. The method of claim 12,
wherein the Watermark Measurement Request (WMR) consists of said Inputs, said Attester Key IDs to sign the AOC the evidence, claims concerning attestation of the origin of the ML Model, and an optional nonce (nonce 2) to prevent replay attacks.
